Europäisches Patentamt

European Patent Office

Office européen des brevets

(19)

(11) Veröffentlichungsnummer: **0 259 345**
**B1**

(12) **EUROPÄISCHE PATENTSCHRIFT**

(45) Veröffentlichungstag der Patentschrift: 11.04.90

(21) Anmeldenummer: 86905387.6

(22) Anmeldetag: 08.09.86

(86) Internationale Anmeldenummer:
PCT/HU86/00048

(87) Internationale Veröffentlichungsnummer:
WO 87/05351 11.09.87 Gazette 87/20

(51) Int. Cl.⁵: **E 03 C 1/044,** A 47 K 3/22

(54) AN SONNENKOLLEKTOR ANGESCHLOSSENE GARTENDUSCHVORRICHTUNG MIT KOMBINIERTEM HAHN.

(30) Priorität: 06.03.86 HU 92986

(43) Veröffentlichungstag der Anmeldung:
16.03.88 Patentblatt 88/11

(45) Bekanntmachung des Hinweises auf die
Patenterteilung:
11.04.90 Patentblatt 90/15

(84) Benannte Vertragsstaaten:
AT CH DE GB LI

(56) Entgegenhaltungen:
AT-A- 150 803
DE-A-2 425 836
DE-A-2 724 513
DE-A-2 724 708
DE-B-2 740 378
GB-A-1 301 853

(73) Patentinhaber: ZVOLENSZKY, István
Széchenyi u. 19/b
H-8600 Siofok (HU)
(73) Patentinhaber: UJFALUSSY, Josef
Cica u. 7/a
H-1164 Budapest (HU)

(72) Erfinder: ZVOLENSZKY, István
Széchenyi u. 19/b
H-8600 Siofok (HU)
Erfinder: UJFALUSSY, Josef
Cica u. 7/a
H-1164 Budapest (HU)

(74) Vertreter: Patentanwälte Viering & Jentschura
Steinsdorfstrasse 6
D-8000 München 22 (DE)

**Beschreibung**

Gegenstand der Erfindung ist eine an einen Sonnenkollektor angeschlossene Gartenduschvorrichtung, die mit kombiniertem Hahn ausgestattet ist, der das Herausdrücken des Warmwassers aus dem Sonnenkollektorkreis und gleichzeitig das in einem gegebenen Verhältnis erfolgende Mischen des kalten und des warmen Wassers gewährleisten kann.

Bekannte mit Sonnenkollektor ausgerüsteten Gartenduschvorrichtungen, bei denen das im Sonnenkollektor aufgewärmte Wasser mittels des Kaltwassers aus dem Leitungsnetz herausgedrückt wird und zugleich die wunschgemäße Minderung der Temperatur des aus dem Kollektorkreis kommenden Warmwassers gewährleistet werden soll, müssen mit mindestens zwei Rohrabsperrhähnen und/oder Ventilen ausgestattet sein.

Eine derartige Ausführungslösung beschreibt die DE—A—2 724 708.

Bei der Ausführung nach dieser Patentschrift bedeutet jedoch der Umstand einen schwerwiegenden Nachteil, daß aufeinmal durch das Öffnen einer Armatur nicht sichergestellt werden kann, daß bei Inbetriebsetzung der Vorrichtung die maximale Kaltwasserzumischung sofort möglich wird, da sowohl die Absperr- als auch die Mischarmatur von dem Leitungswasserdruck belastet sind.

Auch die HU—A—124 115 beschreibt eine Vorrichtung, bei der ebenfalls mehrere Hähne bzw. Ventile eingebaut werden müssen, um das Herausdrücken des Warmwassers aus dem Sonnenkollektorkreis und das Mischen des kalten und des warmen Wassers sicherstellenn zu können.

Nachteil dieser Vorrichtung ist, daß die Absperr- und die Mischarmaturen nicht so angeordnet werden können, wie die herkömmlich üblichen Mischhähne, und deshalb ihre Bedienung unbequem ist, die Hähne leicht miteinander verwechselt werden können und schließlich der Einbau von mehreren Armaturen mehrere Fehlermöglichkeiten (Undichtigkeiten) mitsich bringt.

Nach der DE—A—2 740 378 wird der Kollektor mit über eine erste Kaltwasserleitung zugeführtem Kaltwasser gespeist, wohingegen in die vom Kollektor zur Dusche führende Warmwasserleitung ein Mischhahn eingeschaltet ist, der das Warmwasser mit Kaltwasser aus einer zweiten Kaltwasserleitung mischt. Auch hier steht das Wasser im Kollektor ständig unter Druck.

Ziel der Erfindung ist, eine an einen Sonnenstrahlungskollektor anschließbare Duschvorrichtung mit freiem Ausfluß zu schaffen, bei der das Herausdrücken des Warmwassers mit Hilfe eines einzigen Hahnes verwirklicht und gleichzeitig auch das Vermischen des Warmwassers mit dem kalten Leitungswasser sichergestellt werden kann.

Die gestellte Aufgabe wird nach der Erfindung dadurch gelöst, daß bei der Gartenduschvorrichtung mit kombiniertem Hahn und freiem Auslauf, die mit einem Ständerrohr, einer Brauserosette und Kalt- und Warmwasser-Ein- und Austrittsrohren versehen ist, ein solcher kombinierter Hahn vorgesehen ist, der das Herausdrücken des Warmwassers aus dem Sonnekollektorkreis und gleichzeitig auch das Vermischen des Warm- und des Kaltwassers gewährleistet und der mit einem sich an die Ein- und Austrittsrohre aufsitzend anschließenden mit Gewinde versehenen Hahnkegel und darin mit einem zu diesem koaxialen, entgegengesetzt kegelförmigen, zweckdienlich mittels Gewinde verstellbaren Drosselelement versehen ist.

Vorteil dieser Ausführungslösung ist, daß nur ein einziger spezieller Hahn zum Einbau gelangt, wodurch die Zahl der zur Duschvorrichtung erforderlichen Rohrverzweigungen vermindert werden kann. Gleichzeitig wird auch die Bedienung der Duschvorrichtung bequemer und einfach gestaltet.

Weitere Einzelheiten der Erfindung werden durch Ausführungsbeispiele, anhand Zeichnungen dargestellt.

In der Zeichnung zeigt

Fig. 1 eine Ausführungsform der Erfindung,

Fig. 2 den Hahn im Schnitt,

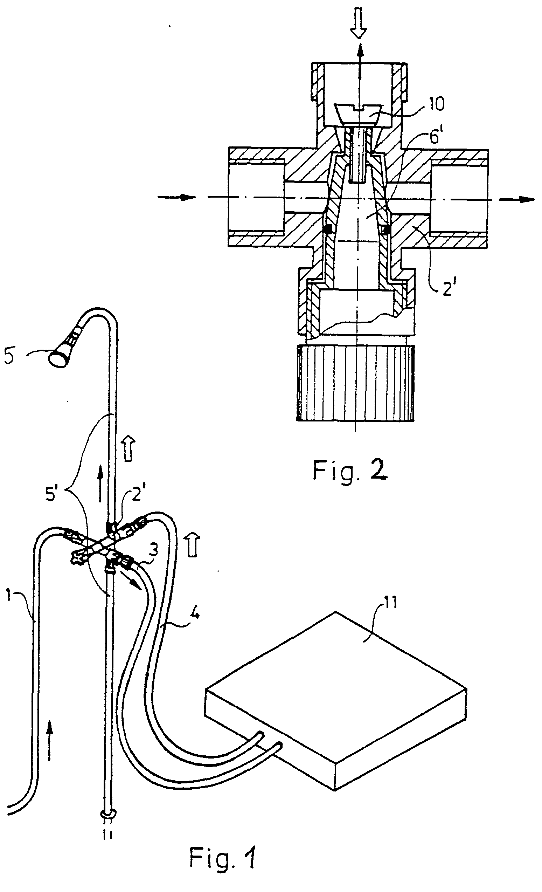

In Fig. 1 bezeichnen die massiv ausgezogenen Pfeile die mögliche Strömungsrichtung des Leitungskaltwassers, die einfassend gezeichneten (leeren) Pfeile hingegen die des Warmwassers aus dem Kollektorkreis.

Die Fig. 2 stellt eine eine mögliche Ausführungsform des Hahnes dar.

Die in Fig. 1 dargestellte Duschvorrichtung ist mit dem in Fig. 2 detailliert dargestellten Hahn ausgerüstet. Bei dem in Fig. 2 dargestellten Hahn 2' ist in dem Hahn ein sich an die Ein- und Austrittsrohre aufsitzend anpassender mit einem Gewinde versehener Hahnkegel und in diesem ein dazu koaxiales zweckdienlicherweise mittels Gewinde verstellbares entgegengesetzt kegelförmiges Drosselelement vorgesehen. Bei der Fig. bezeichnet der voll ausgezogene Pfeil die Strömungsrichtung des Leitungskaltwassers, der umrahmend ausgezogene (1eere) Pfeil die des Warmwassers.

Für die erfindungsgemäße, an den Sonnenkollektor 11 angeschlossene, mit der Brauserosette 5 versehene, zweckdienlich aus Kunststoff gefertigte, mit Ständer sowie Kalt- und Warmwasser-Ein- und Austrittsrohren 1, 3, 4 versehene, mit freiem Ausfluß funktionierende Gartenduschvorrichtung ist demgemäß kennzeichnend, daß sie einen — das Herausdrücken des Warmwassers aus dem Sonnenkollektorkreis und gleichzeitig auch das Mischen des Warm- und Kaltwassers gewährleistenden — kombinierten Hahn 2' besitzt, in dem ein mit Gewinde versehener Hahnkegel 6' und ein zu diesem koaxiales zweckdienlicherweise mittels Gewinde verstellbares entgegengesetzt kegelförmiges Drosselelement 10 angeordnet ist.

Die Arbeitsweise der erfindungsgemäßen Vorrichtung ist, wie folgt.

Bei der Duschvorrichtung nach Fig. 1ist das Wasserleitungsnetz an die Rohrleitung 1 angeschlossen und das zugeleitete Kaltwasser wird durch den kombinierten Absperr und Mischhahn 2' zum Teil in das Rohr 3 und von dort in den Sonnenkollektor geleitet.

Aus dem Sonnenkollektor drückt der Kaltwasserstron das Warmwasser durch das Rohr 4 in die Duschvorrichtung und es gelangt so zun kombinierten Hahn 2'.

Von hier gelangt das Warmwasser mit dem anderen Teil des jeweiis erforderlichen Kaltwassers als Mischwasser in das mit der Brauserosette versehene, aus Kunststoff hergestellte Ständerrohr 5'.

Befindet sich das Drosselelement 10 in vollkommen geöffnetem Zustand, so wird dem Warmwasser aus dem Sonnenkollektorkreis kein Kaltwasser zugemischt, d.h. das System ist außer Betrieb. Wird jedoch das mit einem Gewinde versehene Drosselelement 10 in Richtung der Sperrstellung verdreht, so kann Kaltwasser in laufend größerer Menge dem Warmwasser zugemischt und so dem mit der Rosette versehenen Brauserohr zugeführt werden.

**Patentanspruch**

˙An einen Sonnenkollektor (11) angeschlossene Gartenduschvorrichtung mit kombiniertem Hahn (2') und freiem Auslauf, die mit einem Ständerrohr (5), einer Brauserosette (5) sowie Kalt- und Warmwasser-Ein- und Austrittsrohren (1, 2, 3) versehen ist, dadurch gekennzeichnet, daß von dem kombinierten Hahn (2') das Herausdrücken des Warmwassers aus dem Sonnenkollektorkreis und gleichzeitig auch das Vermischen des Warm- und des Kaltwassers gewährleistet wird und der kombinierte Hahn (2') mit einem sich an die Ein- und Austrittsrohre aufsitzend anschließenden, mit Gewinde versehenen Hahnkegel (6') und darin mit einem zu diesem koaxialen, entgegengesetzt kegelförmien, zweckdienlich mittels Gewinde verstellbaren Drosselelement (10) versehen ist.

**Revendication**

Un équipment de douche de jardin avec un robinet d'eau combiné et une décharge libre, connecté à un collecteur de soleil, muni d' une conduite de soutien, d'une pomme d'arrosoir ainsi que des conduits d'entrée et de sortie pour l'eau froid et chaude, caracterisé en ceque le robinet d'eau combiné garantit que l'eau chaude est pressé par le cycle du collecteur de soleil et en même temps que l'eau chaude et froid se mélangent et le robinet d'eau combiné est muni d' un bouchon de robinet fileté étant posé sur les conduites d'entrée et de sortie, connecté avec ces conduites, et d'un élement d'étranglement qui est coaxiale, opposé conique et avantageusement ajustable à cause d'un filet.

**Claim**

To a solar collector (11) connected garden shower equipment with a combined cock (2') and a free outflow, comprising a bearing conduit (5'), a shower head (5) as well as cold and warm water input and output conduits (1, 3, 4), characterized in that by the combined cock (2') the pressing out of the warm water from the solar collector circuit and at the same time the mixing of the warm and cold water are assured and the combined cock (2') is provided with a cock plug (6') connected in a seated manner to the input and output conduits and provided with a thread, and with a coaxial oppositely cone shaped throttle element (10) which is advantageously adjustable by means of a thread.

Fig. 2

Fig. 1

1